# EUROPÄISCHE PATENTSCHRIFT

(11) **EP 4 116 685 B1**
(45) Veröffentlichungstag und Bekanntmachung des Hinweises auf die Patenterteilung: **25.11.2026**
(21) Anmeldenummer: 22020202.2
(22) Anmeldetag: 03.05.2022
(51) Int. Cl.: H01M 50/202, G01K 1/02, G01K 1/143, H01M 10/48

(54) **ANORDNUNG ZUR TEMPERATURMESSUNG AN EINER BATTERIEZELLE SOWIE BATTERIEZELLE MIT EINER SOLCHEN ANORDNUNG**
ARRANGEMENT FOR TEMPERATURE MEASUREMENT ON A BATTERY CELL AND BATTERY CELL WITH SUCH AN ARRANGEMENT
DISPOSITIF DESTINÉ À LA MESURE DE LA TEMPÉRATURE D'UN ÉLÉMENT DE BATTERIE, AINSI QU'ÉLÉMENT DE BATTERIE DOTÉ D'UN TEL DISPOSITIF

(30) Priorität: 05.07.2021 DE 102021117224
(43) Veröffentlichungstag der Anmeldung: 11.01.2023
(73) Patentinhaber: Dr. Ing. h.c. F. Porsche Aktiengesellschaft, 70435 Stuttgart (DE)
(72) Erfinder: Renz, Fadi, 70806 Kornwestheim (DE); Strobl, Philipp, 71263 Weil der Stadt (DE)

(56) Entgegenhaltungen:
- WO-A1-2010/066556
- DE-A1- 102012 204 898
- DE-A1- 102019 124 604
- DE-A1- 102019 124 605
- DE-A1- 4 312 572
- US-A1- 2011 177 376
- US-A1- 2014 161 151
- US-A1- 2020 319 035

## Beschreibung

### FELD DER ERFINDUNG

Die vorliegende Erfindung bezieht sich auf ein Batteriepack mit mehreren Batteriezellen.

### HINTERGRUND

Die Messung und Überwachung von Temperaturen ist eine in vielen Bereichen der Technik häufig gestellte Aufgabe. Insbesondere in dem stark wachsenden Bereich der Elektromobilität ist neben den bislang bereits an vielen Stellen von Fahrzeugen gemessenen und überwachten Temperaturen die Messung und Überwachung der Temperatur der für die Energieversorgung des Antriebsmotors vorgesehenen Batterie von großer Bedeutung. Im Folgenden werden die Begriffe Batterie und Akkumulator sowie die diese Begriffe umfassenden Begriffe oder Ausdrücke synonym verwendet, sofern sich aus dem Kontext keine jeweils eigene Bedeutung ergibt.

Die für die Energieversorgung des Antriebsmotors vorgesehene Batterie muss einerseits eine große Energiemenge speichern, um eine große Reichweite zu ermöglichen, andererseits muss sie große Leistungen abgeben können, um die Leistungsanforderung des Motors zu erfüllen. Außerdem muss sie mit einer ausreichend großen Leistung geladen werden können, um nach dem Entladen eine schnelle erneute Nutzung zu ermöglichen.

Beim Entladen und beim Laden treten entsprechend hohe Ströme auf, die an den unvermeidlichen inneren Widerständen bzw. bei der dem Laden und Entladen zugrunde liegenden chemischen Reaktion zu einer nicht unerheblichen Temperaturerhöhung führen können. Diese Temperaturerhöhung kann einerseits einen starken Einfluss auf die Lade- oder Entladecharakteristik sowie die Lebensdauer der Batterie haben, andererseits kann ein zu starker Temperaturanstieg zu einer Beschädigung der Batterie oder damit thermisch gekoppelter Komponenten führen, bis hin zu einem Auslösen von Schutzvorrichtungen oder sogar einer unkontrollierten exothermen Reaktion, die letztlich die Nutzung der Batterie und ggf. einer davon versorgten Vorrichtung unmöglich macht.

Aus diesem Grund sind in Hochleistungsbatterien in der Regel Temperatursensoren vorgesehen, welche eine Erhöhung der Temperatur erfassen und an eine Steuervorrichtung leiten. Bei Überschreiten eines Grenzwerts reduziert die Steuervorrichtung die Entlade- oder Ladeleistung, bevor eine Schädigung der Batterie oder damit verbundener Komponenten oder Vorrichtungen eintritt.

Hochleistungsbatterien umfassen üblicherweise eine Vielzahl von Batteriezellen, die seriell und/oder parallel verschaltet sind, um eine geforderte Nennspannung und einen geforderten Nennstrom bereitstellen zu können. Die Batteriezellen sind in der Regel in einem Gehäuse angeordnet, welches einen Schutz vor mechanischer Beschädigung bietet und außerdem Sensoren und zugehörige elektronische Schaltungen beherbergen kann. Außerdem kann das Gehäuse dazu eingerichtet sein, die Batterie zu heizen und/oder zu kühlen, um eine für das Laden oder Entladen der Batterie optimale Temperatur einzustellen. Das Gehäuse wird im Folgenden auch als Batteriepack bezeichnet.

Batteriezellen können u.a. als Rundzellen mit einem festen zylindrischen Gehäuse, prismatische Zellen mit einem quaderförmigen festen Gehäuse oder als sogenannte Pouch-Zellen, d.h. flache Zellen ohne festes Gehäuse vorliegen. Zellen mit eigenem festem Gehäuse bieten bei der Gestaltung von Batteriepacks und bei deren Herstellung Vorteile in der Handhabung. Zudem sind die mechanischen Anforderungen an das Gehäuse kleiner als bei Pouch-Zellen. Außerdem sind Zellen mit festem eigenem Gehäuse in einer Vielzahl von Varianten von einer großen Zahl Hersteller verfügbar, so dass auch kleinere Serien von Batteriepacks kostengünstig hergestellt werden können.

Insbesondere bei Anordnung einer Vielzahl von Batteriezellen in einem Gehäuse ist die Positionierung von Temperatursensoren eine Herausforderung, da ein guter thermischer Kontakt zwischen Temperatursensor und Batteriezelle für die ordnungsgemäße Funktion vor wesentlicher Bedeutung ist.

Aus der DE 10 2019 124 604 A1 ist eine Vorrichtung zur Bestimmung bzw. Überwachung einer Prozessgröße bekannt, bei der ein Temperatursensor auf einem flexiblen Trägerelement angeordnet ist und mittels diesem an einem Behältnis befestigbar ist.

Aus der DE 43 12 572 A1 ist die Temperaturüberwachung einer Fahrzeugbatterie mittels eines Temperatursensors bekannt, welcher mittels eines elastischen Spannbandes an dem Batteriegehäuse befestigt ist.

Aus der US 2014/0161151 A1 ist eine Temperatursensoranordnung bekannt, bei der ein einen Temperatursensor tragendes Gehäuse mittels eines Bandes aus einem flexiblen isolierenden Material an einer Rohrleitung befestigbar ist.

Aus der US 2020/0319035 A1 ist eine Temperaturmessanordnung bekannt, bei der ein Temperatursensor mittels eines Bandes aus einem Elastomer an einem Behältnis, nämliche einer Weinflasche, befestigbar ist und der Sensor durch die elastische Spannung des Bandes gegen das Behältnis gedrückt wird.

DE 10 2012 204 898 A1 offenbart die Befestigung eines Temperatursensor außen an einem von einem Fluid durchströmten Rohr.

Aus der WO 2010/066556 A1 ist eine Temperaturmessvorrichtung zum Messen der Temperatur eines Kochgeschirrelements bekannt, bei der ein Temperatursensor mittels eines biegeelastischen Bandes so an der Außenwand eines Kochgeschirrelements befestigbar ist, dass ein unmittelbarer Wärmekontakt zwischen dem Kochgeschirrelement und einer Kontaktfläche des Temperatursensors hergestellt ist.

Aus der US 2011/0177376 A1 ist die Anordnung mehrerer Batteriezellen zu einer Batterie bzw. einem Batteriepack offenbart, bei der die Temperatur der Zellen mithilfe von in Zwischenverbindungen integrierten Temperatursensoren gemessen wird.

Die DE 603 05 221 T2 schlägt vor, Temperatursensoren so in einer Haltestruktur für mehrere Rundzellen anzuordnen, dass bei ordnungsgemäßer Montage der Rundzellen in der Haltestruktur ein guter thermischer Kontakt zu den jeweiligen Temperatursensoren gegeben ist. Bei der Verwendung von Standard-Batteriezellen mit festem Gehäuse kann eine die Zelle umgebende Isolierhülle den thermischen Kontakt zwischen dem in der Haltestruktur montierten Temperatursensor und Batteriezelle beeinträchtigen. Außerdem kann ein Austausch einzelner Temperatursensoren, etwa bei einem Ausfall, umständlich sein; u. U. muss die gesamte Haltestruktur ausgetauscht werden.

DE 10 2019 124 605 A1 offenbart ein invasives Thermometer mit einem Trägerelement für einen Temperatursensor, ein Heizelement und ein Referenzelement. Das Trägerelement kann zur Befestigung an einem Behältnis Magnete aufweisen. Das Trägerelement kann auch von einem Hüllelement umgeben sein, welches das Trägerelement an einem Behältnis befestigt. Hierzu greifen am Hüllelement Schellen an, die in Rillen des Hüllelements eingreifen.

Es ist Aufgabe der Erfindung, einen neuartigen Batteriepack zu schaffen, bei welchem eine lokale Temperaturerhöhung zuverlässig erkannt und deren Ort bestimmt werden.

### BESCHREIBUNG DER ERFINDUNG

Diese Aufgabe wird durch den in Anspruch 1 angegebenen Batteriepack gelöst.

Bei dem Batteriepack sind Batteriezellen mit einer Anordnung zur Temperaturmessung und Batteriezellen ohne eine solche Anordnung zur Temperaturmessung so zueinander angeordnet, dass eine mit der Anordnung ausgestattete Batteriezelle einen benachbarte Batteriezelle ohne eine solche Anordnung berührt, vorzugsweise im Bereich eines der Temperatursensoren. Auf diese Weise kann die Temperatur zweier benachbarter Batteriezellen mit einem einzigen Temperaturtensor erfasst werden, wodurch die Anzahl der Temperatursensoren verringert werden kann. Eine Differenzierung der Temperatur der benachbarten Batteriezellen kann erfolgen, wenn eine Batteriezelle ohne Anordnung zur Temperaturmessung an zwei Stellen mit mit einer Anordnung zur Temperaturmessung versehenen Batteriezelle in Kontakt steht. Bspw. kann so eine einzelne Batteriezelle bestimmt werden, welche eine gegenüber den benachbarten Batteriezellen höhere Temperatur aufweist.

Im Kontext dieser Beschreibung bezieht sich der Ausdruck "ringförmig geschlossenes Band" auf ein Band, welches keine zwei freien, miteinander zu verbindenden Enden aufweist. Die allgemeine Form des Bandes, d.h., ob es eine ovale Form, Kreisform oder eine Form mit einer oder mehreren Ecken aufweist, ist dabei irrelevant.

Die jeweilige Batteriezelle mit einer jeweiligen Anordnung zur Temperaturmessung ist von einer elektrisch nichtleitenden Hülle umgeben, die als Schrumpfschlauch ausgebildet ist.

Die elektrisch nichtleitende Hülle presst die Anordnung zur Temperaturmessung gegen die Batteriezelle. Bei der Herstellung wird zunächst die Anordnung zur Temperaturmessung an der Batteriezelle angeordnet, und danach die elektrisch nichtleitende Hülle über die Batteriezelle und der Anordnung zur Temperaturmessung angebracht.

Die Temperatursensoren können Thermopaare, PT100- oder PT1000-Messfühler umfassen, halbleiterbasiert sein, oder auf anderen Messprinzipen aufbauen.

Bei einer oder mehreren Ausgestaltungen besteht das ringförmig geschlossene elastische Band aus einem elektrisch nichtleitenden, wärmeleitfähigen und/oder hitzebeständigem Material, bspw. einem Silikon oder silikonbasierten Material, oder dergleichen. Die Verwendung eines elektrisch nichtleitenden Materials bietet den leicht erkennbaren Vorteil, dass bei einer Beschädigung einer elektrischen Leitung oder Verbindung von Batteriezellen kein elektrischer Strom durch das elastische Band an andere Orte geleitet wird. Der Vorteil der Verwendung eines wärmeleitfähigen Materials liegt darin, dass die Genauigkeit der Positionierung des Temperatursensors an oder in dem elastischen Band sowie an der Batteriezelle weniger kritisch ist. Der Vorteil der Verwendung eines hitzebeständigen Materials, insbesondere mit einem weit über den im normalen Betrieb erreichten Temperaturen liegenden Schmelzpunkt oder Flammpunkt, liegt auf der Hand.

Bei einer oder mehreren Ausgestaltungen schließt eine Oberfläche jedes der mindestens zwei Temperatursensoren mit einer innen liegenden Oberfläche des ringförmig geschlossenen elastischen Bands im Wesentlichen bündig ab oder ist zumindest näher an der innen liegenden Oberfläche des ringförmig geschlossenen elastischen Bands positioniert als an einer außen liegenden Oberfläche.

Bei einer oder mehreren Ausgestaltungen weist das elastische Band eine erste elastische Schicht auf, und zumindest an einer der Batteriezelle im montierten Zustand zugewandten Seite der ersten elastischen Schicht ist eine zweite Schicht angeordnet. Die zweite Schicht weist eine größere Wärmeleitfähigkeit auf als die erste elastische Schicht. Eine Oberfläche jedes der mindestens zwei Temperatursensoren steht mit der zweiten Schicht in thermischem Kontakt.

Bei einer oder mehreren Ausgestaltungen sind elektrische Leitungen der mindestens zwei Temperatursensoren zu einer Außenseite des ringförmig geschlossenen elastischen Bands geführt und dort herausgeführt oder elektrisch kontaktierbar.

Bei einer oder mehreren Ausgestaltungen sind die mindestens zwei Temperatursensoren entlang des Umfangs des ringförmig geschlossenen elastischen Bands gleichmäßig verteilt angeordnet. Diese Anordnung der Temperatursensoren kann insbesondere an Batteriezellen mit symmetrischem, vorzugsweise rotationssymmetrischem Querschnitt neben einer gewissen Redundanz eine bessere Schätzung der Temperatur in einem Bereich der Batteriezelle zwischen den Temperatursensoren ermöglichen.

Die Anordnung ist zur Temperaturmessung an der äußeren Oberfläche der Batteriezelle angeordnet, bspw. in einer um die Batteriezelle umlaufenden Nut oder Vertiefung. Dabei liegt die Anordnung zur Temperaturmessung vorzugsweise unter elastischer Spannung an der äußeren Oberfläche der Batteriezelle an.

### KURZE BESCHREIBUNG DER ZEICHNUNG

Im Folgenden wird die Erfindung mit Bezug auf die Figuren der Zeichnung beschrieben. In der Zeichnung zeigt
- Fig. 1: eine schematische Darstellung einer ersten Ausführungsform einer an einer Batteriezelle anordenbaren Anordnung zur Temperaturmessung,
- Fig. 2: eine schematische Darstellung einer zweiten Ausführungsform einer an einer Batteriezelle anordenbaren Anordnung zur Temperaturmessung,
- Fig. 3: eine schematische Darstellung einer dritten Ausführungsform einer an einer Batteriezelle anordenbaren Anordnung zur Temperaturmessung,
- Fig. 4: eine perspektivische Ansicht einer Ausführungsform einer an einer Batteriezelle anordenbaren Anordnung zur Temperaturmessung,
- Fig. 5: eine perspektivische Explosionszeichnung einer Batteriezelle mit einer Anordnung zur Temperaturmessung,
- Fig. 6: eine perspektivische Ansicht der Batteriezelle in fertig montiertem Zustand,
- Fig. 7: eine Detailansicht eines Schnitts durch die Batteriezelle mit daran angeordneter Anordnung zur Temperaturmessung,
- Fig. 8: eine Draufsicht auf die Batteriezelle mit daran angeordneter Anordnung zur Temperaturmessung,
- Fig. 9: eine Draufsicht auf ein beispielhaftes erfindungsgemäßes Batteriepack mit mehreren Batteriezellen, von denen zumindest einige eine Anordnung zur Temperaturmessung aufweisen,
- Fig. 10: eine Seitenansicht eines beispielhaften erfindungsgemäßen Batteriepacks mit mehreren Batteriezellen mit Anordnungen zur Temperaturmessung, und
- Fig 11: ein Flussdiagramm eines beispielhaften Verfahrens zur Herstellung einer Batteriezelle mit einer Anordnung zur Temperaturmessung.

In den Figuren können gleiche oder ähnliche Elemente mit denselben Bezugszeichen referenziert sein.

### BESCHREIBUNG VON AUSFÜHRUNGSBEISPIELEN

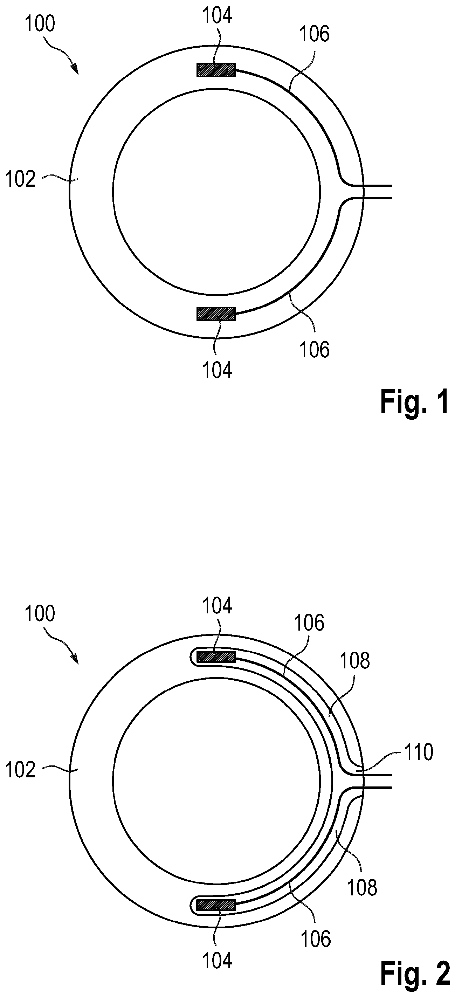

Figur 1 zeigt eine schematische Darstellung einer ersten Ausführungsform einer an einer Batteriezelle anordenbaren Anordnung 100 zur Temperaturmessung. In einem ringförmig geschlossenen elastisches Band 102 sind zwei Temperatursensoren 104 angeordnet, bspw. eingegossen oder umspritzt. In der Figur liegen die Temperatursensoren 104 sich diagonal gegenüber, wobei andere Positionierungen möglich sind, insbesondere bei einer größeren Anzahl Sensoren. Die Temperatursensoren 104 sind mittels Leitungen 106 kontaktierbar, welche aus dem elastischen Band 102 herausgeführt sind. Die Leitungen 106 können in das elastische Band 102 eingegossen oder umspritzt sein, wobei die Leitungen in diesem Fall vorzugsweise in einer Wellenlinie verlegt sein können, um eine Dehnung des elastischen Bandes kompensieren zu können ohne zu reißen. Alternativ zu den Leitungen 106 können auch elektrische Kontaktflächen an der Außenseite des elastischen Bandes 102 vorgesehen sein, über welche die Temperatursensoren 104 kontaktiert werden können (nicht in der Figur dargestellt). Die Temperatursensoren 104 können auch näher zu dem Innenumfang des elastischen Bands angeordnet sein, um hier eine bessere thermische Kopplung zu ermöglichen (nicht in der Figur gezeigt).
Figur 2 zeigt eine schematische Darstellung einer zweiten Ausführungsform einer an einer Batteriezelle anordenbaren Anordnung 100 zur Temperaturmessung. Bei dieser Ausführungsform ist in dem elastischen Band 102 ein Hohlraum 108 vorgesehen, in welchem die Temperatursensoren 104 gelagert bzw. eingebracht sind. Die Leitungen 106 sind durch eine Öffnung 110 aus dem elastischen Band 102 herausgeführt und können so leicht kontaktiert werden. Das elastische Band 102 kann dabei aus zwei Hälften zusammengesetzt sein, von denen zumindest eine den Hohlraum 108 aufweist, wobei die Temperatursensoren 104 vor dem Zusammensetzen der Hälften in dem Hohlraum 108 angeordnet wird. Es ist auch möglich, die Temperatursensoren 104 über die Öffnung 110 in das ansonsten komplett fertiggestellte elastische Band 102 einzuführen und zu platzieren. Bei den mit Bezug auf Figur 2 erläuterten Ausführungen kann außerdem eine gewisse Beweglichkeit der Leitungen 106 in dem Hohlraum 108 gegeben sein, so dass eine Dehnung des elastischen Bandes 102 nicht zu einer Beschädigung der Leitungen 106 führt.

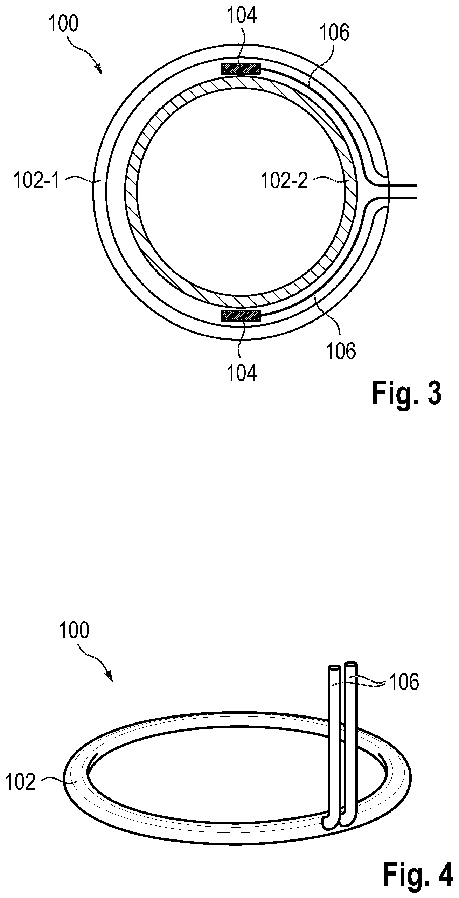

Figur 3 zeigt eine schematische Darstellung einer dritten Ausführungsform einer an einer Batteriezelle anordenbaren Anordnung 100 zur Temperaturmessung. Bei dieser Ausführungsform umfasst das elastische Band 102 zumindest eine erste Schicht 102-1 und eine zweite Schicht 102-2. Die erste Schicht 102-1 kann dabei eine geforderte Elastizität bereitstellen, während die zweite Schicht 102-2 eine gegenüber der ersten Schicht 102-1 größere Wärmeleitfähigkeit aufweisen kann, so dass eine verbesserte thermische Kopplung an der Batteriezellegegeben ist, an welchem die Anordnung 100 angeordnet ist. Die zweite Schicht 102-2 kann auch eine gewisse Plastizität aufweisen, welche eine verbesserte Formanpassung an der Batteriezelleermöglicht, an welchem die Anordnung 100 angeordnet ist.
Figur 4 zeigt eine perspektivische Ansicht einer Ausführungsform einer an einer Batteriezelle anordenbaren Anordnung 100 zur Temperaturmessung. In dieser Figur ist gut zu erkennen, wie die Leitungen 106 aus dem elastischen Ring herausgeführt sind und eine leichte Kontaktierung ermöglichen.

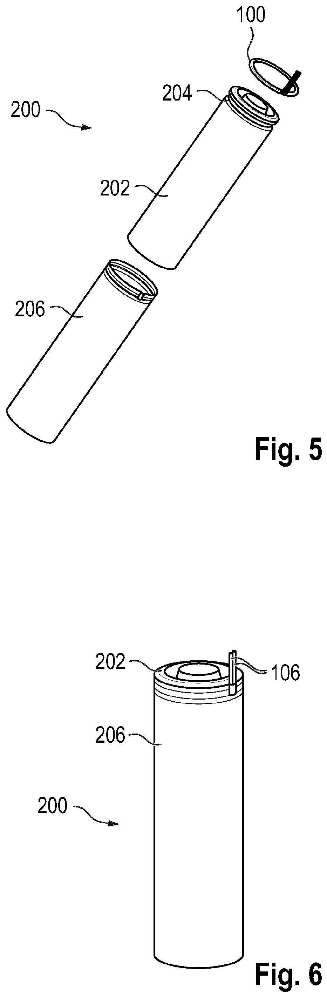

Figur 5 zeigt eine perspektivische Explosionszeichnung einer Batteriezelle 200 mit einer Anordnung 100 zur Temperaturmessung. Die Batteriezelle 200 umfasst ein Batteriegehäuse 202, an dessen einem Ende eine Nut 204 geformt ist. Die Batteriezelle 200 umfasst in der Figur nicht näher bezeichnete Sicherheitsvorrichtungen, bspw. einen als PTC-Widerstand ausgeführten Temperaturschutz und ein Überdruckventil, sowie zwei Elektroden. Eine der Elektroden kann durch das Batteriegehäuse 202 gebildet sein. Die Anordnung 100 zur Temperaturmessung ist bereits in der Nähe der Nut 204 dargestellt, in welcher sie angeordnet werden soll. Eine Umhüllung 206 ist unterhalb des Batteriegehäuses 202 dargestellt. Die Umhüllung 206 besteht aus einem Material, das sich bei Wärmezufuhr zusammenzieht und sich so an die Konturen des Batteriegehäuses anlegt.
Figur 6 zeigt eine perspektivische Ansicht der Batteriezelle 200 aus Figur 5 in fertig montiertem Zustand. Die Komponenten In dieser Darstellung ist gut erkennbar, dass die Umhüllung 206 außer dem Batteriegehäuse 202 auch die Anordnung 100 zur Temperaturmessung umschließt und sicher in der Nut 204 hält, so dass eine Lageveränderung der Anordnung 100 zur Temperaturmessung nahezu ausgeschlossen werden kann. Lediglich die Leitungen 106 treten aus der Umhüllung 206 heraus, so dass sie leicht kontaktiert werden können.

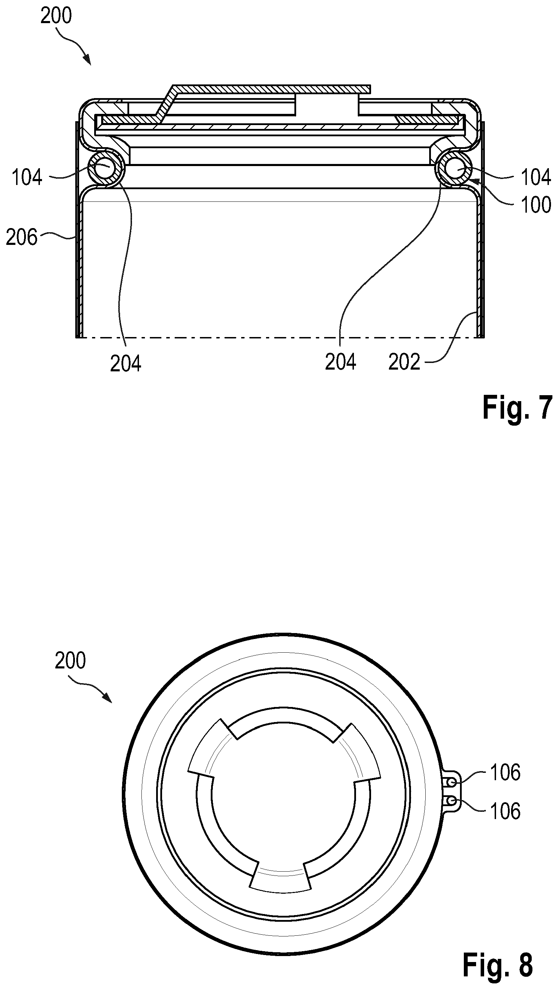

Figur 7 zeigt eine Detailansicht eines Schnitts durch die Batteriezelle 200 mit daran angeordneter Anordnung 100 zur Temperaturmessung. In dieser Ansicht ist die Lage der Anordnung 100 in der Nut 204 gut erkennbar, sowie die Lage der Temperatursensoren 104. Ebenfalls erkennbar ist, wie die Umhüllung 206 das Batteriegehäuse 202 und die Anordnung 100 zur Temperaturmessung umschließt. Die weiteren Elemente der Batteriezelle 200 sind konventioneller Natur und werden daher an dieser Stelle nicht näher erläutert.
Figur 8 zeigt eine Draufsicht auf die Batteriezelle 200 mit daran angeordneter Anordnung 100 zur Temperaturmessung. In dieser Ansicht ist leicht erkennbar, dass lediglich die Leitungen 206 über die Abmessungen der Batteriezelle 200 hinausragen. Da die Leitungen 106 vorzugsweise flexibel sind, und außerdem besonders dünn ausgeführt sein können, bspw. als auf oder in einem flexiblen Substrat angeordnete flache Leiter, verursachen sie bei der Montage mehrerer Batteriezelle 200 zu einem Batteriepack keine größeren Schwierigkeiten.

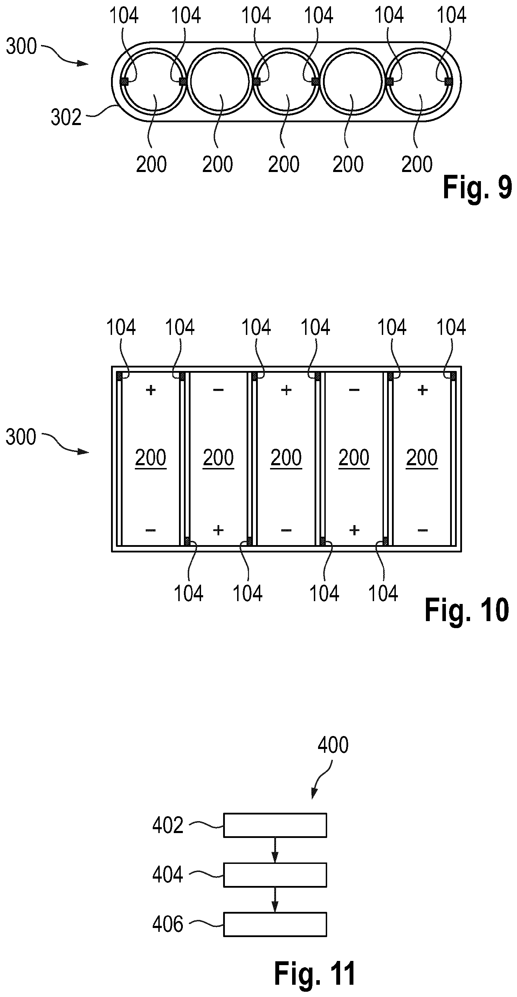

Figur 9 zeigt eine Draufsicht auf ein beispielhaftes Batteriepack 300 mit mehreren Batteriezellen 200, von denen zumindest einige eine Anordnung 100 zur Temperaturmessung aufweisen. Das Batteriepack 300 weist ein Gehäuse 320 auf, in welchem die Batteriezelle 200 in einer Reihe angeordnet sind. An drei der Batteriezellen 200, nämlich den beiden außen angeordneten sowie der in der Mitte angeordneten, ist die Lage der Temperatursensoren 104 eingezeichnet. Die beiden anderen Batteriezellen können ohne Anordnung 100 zur Temperaturmessung ausgeführt sein, oder die Temperatursensoren können sich an einer anderen Position befinden. Da die Temperatursensoren 104 in der Regel nicht gerichtet messen, wird auch die Temperatur der Batteriezellen 200 erfasst, welche benachbart zu mit einer Anordnung 100 zur Temperaturmessung versehenen Batteriezellen 200 angeordnet sind. Die Zugehörigkeit der Temperatursensoren 104 zu jeweiligen Batteriezellen 200 ist anhand deren Anordnung bezüglich der Umrisse erkennbar. Eine einzelne Batteriezelle 200, deren Temperatur erhöht ist, kann ggf. durch die Temperaturunterschiede zu benachbarten Batteriezellen bestimmt werden.

Figur 10 zeigt eine Seitenansicht eines beispielhaften Batteriepacks 300 mit mehreren Batteriezellen 200 mit Anordnungen 100 zur Temperaturmessung. Bei diesem Batteriepack 300 sind die Batteriezellen 200 seriell verschaltet, um eine gewünschte Spannung des Batteriepacks 300 zu erreichen. Bei Batteriezellen 200, deren Elektroden an gegenüberliegenden Enden angeordnet sind, werden diese in dazu der Regel so zueinander angeordnet, dass eine positive Elektrode einer Batteriezelle 200 neben einer negativen Elektrode einer benachbarten Batteriezelle 200 zu liegen kommt, so dass nur kurze Verbindungsleitungen benötigt werden. Wenn stets an derselben Elektrode jeder der Batteriezellen 200 eine Anordnung 100 zur Temperaturmessung vorgesehen ist (in der Figur durch die Temperatursensoren 104 angedeutet), kann so an zwei gegenüberliegenden Seiten der Batteriezellen 200 des Batteriepacks 300 die Temperatur überwacht werden.

Figur 11 zeigt ein Flussdiagramm eines beispielhaften Verfahrens 400 zur Herstellung einer Batteriezelle 200 mit einer Anordnung 100 zur Temperaturmessung. In Schritt 402 werden ein Gehäuse 202 einer Batteriezelle 200, mit allen weiteren Komponenten und Elementen einer Batteriezelle 200, eine Umhüllung 206, sowie eine Anordnung 100 zur Temperaturmessung bereitgestellt. In Schritt 404 wird die Anordnung 100 zur Temperaturmessung an dem Gehäuse 202 der Batteriezelle 200 befestigt. Schließlich wird in Schritt 406 das Gehäuse 202 der Batteriezelle 200 sowie die daran angeordnete Anordnung 100 zur Temperaturmessung mit einer Umhüllung 206 umgeben bzw. umhüllt.

### LISTE DER BEZUGSZEICHEN (TEIL DER BESCHREIBUNG)

- 100: Anordnung
- 102: elastisches Band
- 102-1: erste Schicht
- 102-2: zweite Schicht
- 104: Temperatursensor
- 106: Leitung
- 108: Hohlraum
- 110: Öffnung
- 200: Batteriezelle
- 202: Batteriegehäuse
- 204: Nut
- 206: Umhüllung
- 300: Batteriepack
- 302: Gehäuse
- 400: Verfahren
- 402: Bereitstellen
- 404: Umgeben/Umhüllen

## Patentansprüche

1. Batteriepack (300) mit mehreren Batteriezellen (200),
wobei mindestens eine der Batteriezellen (200) eine Anordnung (100) zur Temperaturmessung aufweist,
**dadurch gekennzeichnet, dass**
die jeweilige Anordnung (100) zur Temperaturmessung ein ringförmig geschlossenes elastisches Band (102) umfasst, entlang dessen Umfangs oder in dessen Inneren mindestens zwei Temperatursensoren (104) voneinander beabstandet angeordnet sind,
die jeweilige Batteriezelle (200), welche die jeweilige Anordnung (100) zur Temperaturmessung aufweist, mit einer elektrisch nichtleitenden, als Schrumpfschlauch ausgebildeten Hülle (206), deren Material sich bei Wärmezufuhr zusammenzieht, umgeben ist, welche die Anordnung (100) zur Temperaturmessung gegen die jeweilige Batteriezelle (200) presst,
wobei Batteriezellen (200) mit einer jeweiligen Anordnung (100) zur Temperaturmessung und Batteriezellen (200) ohne eine solche Anordnung (100) zur Temperaturmessung so zueinander angeordnet sind, dass eine mit der jeweiligen Anordnung (100) zur Temperaturmessung ausgestattete Batteriezelle (200) im Bereich eines der Temperatursensoren (104) eine benachbarte Batteriezelle (200) ohne eine solche Anordnung (100) zur Temperaturmessung berührt.

2. Batteriepack (300) nach Anspruch 1, wobei das ringförmig geschlossene elastische Band (102) der jeweiligen Anordnung (100) zur Temperaturmessung aus einem elektrisch nichtleitenden, wärmeleitfähigen und/oder hitzebeständigem Material besteht.

3. Batteriepack (300) nach einem der vorhergehenden Ansprüche, wobei eine Oberfläche jedes der mindestens zwei Temperatursensoren (104) der jeweiligen Anordnung (100) zur Temperaturmessung mit einer innen liegenden Oberfläche des ringförmig geschlossenen elastischen Bands (102) im Wesentlichen bündig abschließt oder zumindest näher an der innen liegenden Oberfläche des ringförmig geschlossenen elastischen Bands (102) positioniert ist als an einer außen liegenden Oberfläche.

4. Batteriepack (300) nach einem der vorhergehenden Ansprüche, wobei das elastische Band (102) der jeweiligen Anordnung (100) zur Temperaturmessung eine erste elastische Schicht (102-1) aufweist, wobei zumindest an einer der Batteriezellen (200) im montierten Zustand zugewandten Seite der ersten elastischen Schicht (102-1) eine zweite Schicht (102-2) angeordnet ist, welche eine größer Wärmeleitfähigkeit aufweist als die erste elastische Schicht (102-1), und wobei eine Oberfläche jedes der mindestens zwei Temperatursensoren (104) mit der zweiten Schicht (102-2) in Kontakt steht.

5. Batteriepack (300) nach einem der vorhergehenden Ansprüche, wobei elektrische Leitungen (106) der mindestens zwei Temperatursensoren (104) der jeweiligen Anordnung (100) zur Temperaturmessung zu einer Außenseite des ringförmig geschlossenen elastischen Bands (102) geführt und dort herausgeführt oder elektrisch kontaktierbar sind.

6. Batteriepack (300) nach Anspruch 1 oder 2, wobei die mindestens zwei Temperatursensoren (104) der jeweiligen Anordnung (100) zur Temperaturmessung entlang des Umfangs des ringförmig geschlossenen elastischen Bands (102) gleichmäßig verteilt angeordnet sind

7. Batteriepack (300) nach einem der vorhergehenden Ansprüche, , wobei die jeweilige Anordnung (100) zur Temperaturmessung in einer um die jeweilige Batteriezelle (200) umlaufenden Nut (204) angeordnet ist.

8. Batteriepack (300) nach einem der vorhergehenden Ansprüche, wobei die jeweilige Anordnung (100) zur Temperaturmessung unter elastischer Spannung an einer Außenseite der jeweiligen Batteriezelle (200) anliegt.

## Claims

1. A battery pack (300) having a plurality of battery cells (200), wherein at least one of the battery cells (200) comprises an arrangement (100) for temperature measurement,
**characterised in that**
the respective arrangement (100) for temperature measurement comprises an annularly closed elastic band (102) with at least two temperature sensors (104) spaced apart from one another along its periphery or inside thereof,
the respective battery cell (200) comprising the respective arrangement (100) for temperature measurement is surrounded by an electrically non-conductive sheath (206) configured as heat-shrink tubing, the material of said sheath contracting upon heat supply, which presses the arrangement (100) for temperature measurement against the respective battery cell (200),
wherein battery cells (200) having a respective arrangement (100) for temperature measurement and battery cells (200) without such an arrangement (100) for temperature measurement are arranged to each other such that a battery cell (200) equipped with the respective arrangement (100) for temperature measurement, in the range of one of the temperature sensors (104), contacts an adjacent battery cell (200) without such an arrangement (100) for temperature measurement.

2. The battery pack (300) according to claim 1, wherein the annularly closed elastic band (102) of the respective arrangement (100) for temperature measurement is comprised of an electrically non-conductive, thermally conductive, and/or heat-resistant material.

3. The battery pack (300) according to any one of the preceding claims, wherein a surface of each of the at least two temperature sensors (104) of the respective arrangement (100) for temperature measurement is flush with an inner surface of the annularly closed elastic band (102) or positioned at least closer to the inner surface of the annularly closed elastic band (102) than to an outer surface.

4. The battery pack (300) according to any one of the preceding claims, wherein the elastic band (102) of the respective arrangement (100) for temperature measurement comprises a first elastic layer (102-1), wherein on a side of the first elastic layer (102-1) facing at least one of the battery cells (200) in the mounted state a second layer (102-2) is disposed, said second layer having a greater thermal conductivity than the first elastic layer (102-1), and wherein a surface of each of the at least two temperature sensors (104) is in contact with the second layer (102-2).

5. The battery pack (300) according to any one of the preceding claims, wherein electrical leads (106) of the at least two temperature sensors (104) of the respective arrangement (100) for temperature measurement are guided to an outer side of the annularly closed elastic band (102) and are led out therefrom or electrically contactable.

6. The battery pack (300) according to claim 1 or 2, wherein the at least two temperature sensors (104) of the respective arrangement (100) for temperature measurement are evenly distributed along the periphery of the annularly closed elastic band (102)

7. The battery pack (300) according to any one of the preceding claims, wherein the respective arrangement (100) for temperature measurement is arranged in a groove (204) surrounding the respective battery cell (200).

8. The battery pack (300) according to any one of the preceding claims, wherein the respective arrangement (100) for temperature measurement abuts an outer side of the respective battery cell (200) under elastic tension.

## Revendications

1. Bloc-batterie (300) comprenant plusieurs cellules de batterie (200),
au moins une cellule de batterie (200) présentant un dispositif (100) de mesure de la température,
**caractérisé en ce que**
le dispositif (100) de mesure de la température comprend une bande élastique fermée annulaire (102) sur le pourtour de laquelle ou à l'intérieur de laquelle sont agencés au moins deux capteurs de température (104) espacés l'un de l'autre,
la cellule de batterie (200) présentant le dispositif (100) de mesure de la température est entourée d'une gaine (206) non conductrice d'électricité consistant en un tube de matériau thermorétractable qui presse le dispositif (100) contre ladite cellule de batterie (200) ;
les cellules de batterie (200) dotées d'un dispositif (100) de mesure de la température et les cellules de batterie (200) non dotées d'un tel dispositif (100) sont agencées de telle manière qu'une cellule de batterie (200) pourvue dudit dispositif (100) touche, à proximité d'un des capteurs de température (104), une cellule de batterie (200) adjacente non pourvue d'un tel dispositif (100).

2. Bloc-batterie (300) selon la revendication 1, dans lequel la bande élastique (102) fermée annulaire du dispositif (100) de mesure de la température se compose d'un matériau qui est non conducteur d'électricité, qui est conducteur thermique et/ou qui est résistant à la chaleur.

3. Bloc-batterie (300) selon l'une des revendications précédentes, dans lequel une surface de chacun des au moins deux capteurs de température (104) du dispositif (100) de mesure de la température se termine sensiblement à affleurement avec une surface intérieure de la bande élastique fermée annulaire (102) ou est positionnée au moins plus près de la surface intérieure de la bande élastique fermée annulaire (102) que d'une surface extérieure.

4. Bloc-batterie (300) selon l'une des revendications précédentes, dans lequel la bande élastique (102) du dispositif (100) de mesure de la température présente une première couche élastique (102-1), une deuxième couche (102-2) étant agencée au moins sur une face de la première couche élastique (102-1) qui est tournée vers les cellules de batterie (200) à l'état monté, laquelle deuxième couche présente une conductivité thermique supérieure à celle de la première couche élastique (102-1), et une surface de chacun des au moins deux capteurs de température (104) étant en contact avec la deuxième couche (102-2).

5. Bloc-batterie (300) selon l'une des revendications précédentes, dans lequel des lignes électriques (106) des au moins deux capteurs de température (104) du dispositif (100) de mesure de la température sont dirigées vers l'extérieur de la bande élastique fermée annulaire (102) d'où elles sortent ou peuvent être mises en contact électrique.

6. Bloc-batterie (300) selon la revendication 1 ou 2, dans lequel les au moins deux capteurs de température (104) du dispositif (100) de mesure de la température sont agencés selon une répartition uniforme sur le pourtour de la bande élastique fermée annulaire (102).

7. Bloc-batterie (300) selon l'une des revendications précédentes, dans lequel le dispositif (100) de mesure de la température est agencé dans une rainure (204) entourant la cellule de batterie (200).

8. Bloc-batterie (300) selon l'une des revendications précédentes, dans lequel le dispositif (100) de mesure de la température est appliqué sur l'extérieur de la cellule de batterie (200) sous l'effet d'une tension élastique.
